# EUROPEAN PATENT APPLICATION

(11) **EP 4 601 023 A1**
(43) Date of publication of application: **13.08.2025**
(21) Application number: 23907842.1
(22) Date of filing: 21.12.2023
(51) Int. Cl.: H01M 4/04, H01M 4/66, B05D 3/14, H05H 1/34

(54) **ELECTRODE MANUFACTURING DEVICE AND ELECTRODE MANUFACTURING METHOD**

(30) Priority: 22.12.2022 KR 20220182378
(71) Applicant: LG Energy Solution, Ltd., Seoul 07335 (KR)
(72) Inventor: MOON, Jae Won, Daejeon 34122 (KR); PAENG, Ki Hoon, Daejeon 34122 (KR); JEONG, Yeon Beom, Daejeon 34122 (KR)
(74) Representative: Hoffmann Eitle
(86) International application number: PCT/KR2023/021352
(87) International publication number: WO 2024/136559

(57) **Abstract**

The present invention relates to an electrode manufacturing apparatus including an unwinding part for continuously supplying an electrode current collector wound in the form of a roll, a plasma treatment unit for performing plasma treatment on the surface of the wound electrode current collector, an active material application unit in which an active material layer is disposed by applying an active material slurry to the surface of the electrode current collector, a drying unit for drying an active material layer disposed on the surface of the electrode current collector, and a winding unit for winding the electrode current collector on which the active material layer is dried into the form of a roll, wherein the plasma treatment unit includes a guide roller that applies tension to the electrode current collector and at least one plasma generator inside the guide roller, wherein the plasma generator performs surface treatment by spraying a gas in a plasma state onto the surface of the electrode current collector in contact with the guide roller.

## Description

### TECHNICAL FIELD

This application claims the benefit of Korean Patent Application No. 10-2022-0182378, filed on December 22, 2022, in the Korean Intellectual Property Office, the disclosure of which is incorporated herein in its entirety by reference.

The present invention relates to an electrode manufacturing apparatus and an electrode manufacturing method, and more specifically, to an electrode manufacturing apparatus and an electrode manufacturing method for forming a uniform surface level through uniform plasma treatment on the surface of an electrode current collector.

### BACKGROUND ART

In general, types of a secondary battery include a nickel cadmium battery, a nickel hydrogen battery, a lithium ion battery, a lithium ion polymer battery, and the like. Such a secondary battery is applied and used in small products such as digital cameras, P-DVDs, MP3P, mobile phones, PDAs, portable game devices, power tools, and e-bikes, as well as large products that require high power such as electric vehicles and hybrid vehicles, and power storage devices for storing surplus generated power or renewable energy, and power storage devices for backup power.

To manufacture an electrode assembly, a cathode, a separator, and an anode are manufactured, and stacked. Specifically, a cathode active material slurry is applied to a cathode current collector, an anode active material slurry is applied to an anode current collector, and roll-pressing and the like are performed to manufacture the cathode and the anode. Then, a separator is interposed and stacked between the cathode and the anode manufactured above to form unit cells, and the unit cells are stacked with each other to form an electrode assembly. Then, the above-described electrode assembly is received in a case, and an electrolyte solution is injected into the case to manufacture a secondary battery.

Meanwhile, as an electrode current collector for a secondary battery, metal foil, such as aluminum foil or copper foil, is used, and in order to apply an active material slurry to the electrode current collector and roll-pressing the same, roll-pressing oil may be used for the electrode current collector. At this time, if the active material slurry applied to the metal foil is an aqueous slurry based on an aqueous medium, due to oiliness of the metal foil remaining due to the roll-pressing oil, wetting is problematic, and there is a problem in that it is difficult to coat the aqueous slurry.

In order to prevent the above-described problems, a separate process of washing with water may be performed on the metal foil to remove the oiliness before coating the aqueous slurry, which requires separate equipment, thereby resulting in increased costs, and it is difficult to apply the process of washing with water to a continuous process when manufacturing an electrode, which is not preferable.

### DISCLOSURE OF THE INVENTION

### TECHNICAL PROBLEM

The present invention is made to solve the above-described problems, and aims to provide an electrode manufacturing apparatus and an electrode manufacturing method wherein the bonding force between an electrode current collector and an active material layer is improved, the occurrence of wrinkles of the electrode current collector is prevented, which may improve the quality of an electrode, and the equipment configuration is simplified, which may improve process efficiency.

### TECHNICAL SOLUTION

In one aspect, the present invention provides an electrode manufacturing apparatus including an unwinding part for continuously supplying an electrode current collector wound in the form of a roll, a plasma treatment unit for performing plasma treatment on the surface of the wound electrode current collector, an active material application unit in which an active material layer is disposed by applying an active material slurry to the surface of the electrode current collector, a drying unit for drying an active material layer disposed on the surface of the electrode current collector, and a winding part for winding the electrode current collector on which the active material layer is dried into the form of a roll, wherein the plasma treatment unit includes a guide roller that applies tension to the electrode current collector and at least one plasma generator inside the guide roller, wherein the plasma generator performs surface treatment by spraying a gas in a plasma state onto the surface of the electrode current collector in contact with the guide roller.

In another aspect, the present invention provides an electrode manufacturing method, the method including (A) preparing an electrode current collector, (B) plasma-treating the surface of the electrode current collector, and (C) applying an active material slurry to the surface of the electrode current collector to form an active material layer, wherein the step (B) is performed by a plasma generator disposed inside a guide roller that transports the electrode current collector and applies tension to the electrode current collector.

### ADVANTAGEOUS EFFECTS

An electrode manufacturing apparatus according to the present invention may have improved bonding force between an electrode current collector and an active material layer since a plasma generator removes oiliness of the electrode current collector, thereby increasing the surface energy.

In the electrode manufacturing apparatus according to the present invention, a guide roller including the plasma generator is disposed to be in contact with the electrode current collector, and a gas in a plasma state is discharged from the plasma generator, thereby preventing the occurrence of wrinkles of the electrode current collector.

The electrode manufacturing apparatus according to the present invention includes the plasma generator inside the guide roller, and thus, does not require a separate plasma treatment space, so that the process efficiency may be improved by introducing the apparatus to a continuous process.

The electrode manufacturing method according to the present invention may improve process efficiency by omitting a washing process, if a slurry used for forming an active material layer is an aqueous active material slurry, and applying the aqueous active material slurry to the electrode current collector.

### BRIEF DESCRIPTION OF THE DRAWINGS

FIG. 1 is a schematic view for describing an electrode manufacturing apparatus according to an embodiment of the present invention.
FIG. 2 is a schematic side view for describing a plasma treatment unit according to an embodiment of the present invention.
FIG. 3 is a view from above of a plasma treatment unit according to an embodiment of the present invention.
FIG. 4 is a view for describing a plasma treatment unit according to another embodiment of the present invention.

### MDOE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the present invention. In the present specification, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present specification, when a part is said to include a certain component, it means that the part may further include another component rather than excluding another component unless otherwise stated.

In the present specification, the description of "A and/or B" means A, or B, or A and B.

In the present specification, "%" means wt% unless otherwise noted.

### Electrode manufacturing apparatus

Hereinafter, an electrode manufacturing apparatus according to embodiments of the present invention will be described in detail with reference to the accompanying drawings. In assigning reference numerals to components of each drawing, the same elements may have the same reference numerals when possible even though they are shown in different drawings. In addition, in describing the present invention, when it is determined that detailed descriptions of related known compositions or functions may obscure the gist of the present invention, the detailed descriptions may be omitted.

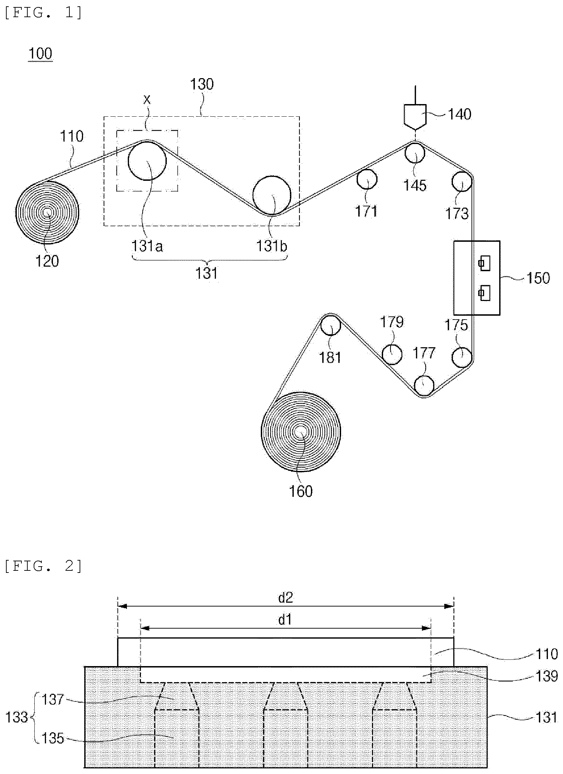

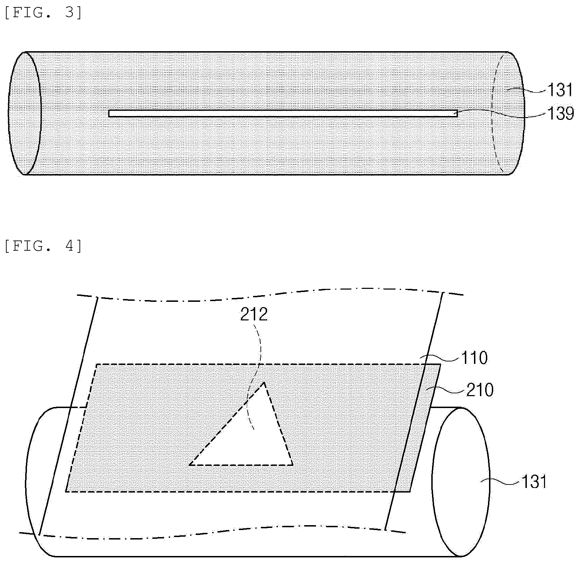

Specifically, FIG. 1 is a schematic view for describing an electrode manufacturing apparatus according to an embodiment of the present invention. FIG. 2 is a schematic side view a plasma treatment unit according to an embodiment of the present invention. FIG. 3 is a view from above of a plasma treatment unit according to an embodiment of the present invention. Specifically, FIG. 2 and FIG. 3 are views of enlarged X region in FIG. 1.

Referring to FIG. 1, an electrode manufacturing apparatus 100 according to the present invention may include an unwinding part 120 for continuously supplying an electrode current collector 110 wound in the form of a roll, a plasma treatment unit 130 for plasma-treating the surface of the wound electrode current collector 110, an active material application unit 140 for applying an active material slurry on the surface of the electrode current collector 110 to provide an active material layer, a drying unit 150 for drying the active material layer disposed on the electrode current collector 110, and a winding part 160 for winding the electrode current collector 110 having the dried active material layer into the form of a roll.

The unwinding part 120 is a component for unwinding the electrode current collector 110 wound in the form of a roll. Specifically, the unwinding part 120 may have the form of a roller, and the electrode current collector 110 may be wound or unwound depending on a rotation direction. The unwinding part 120 may unwind the electrode current collector 110 wound in the form of a roll and continuously supply the electrode current collector 110 to the plasma treatment unit 130.

The electrode current collector 110 is not particularly limited as long as it has high conductivity without causing a chemical change in a battery, and for example, may include at least one selected from the group consisting of copper, stainless steel, aluminum, nickel, titanium, heat-treated carbon and an aluminum-cadmium alloy.

The electrode current collector 110 may have fine irregularities formed on the surface thereof to improve the bonding force of an active material. For example, the electrode current collector may be used in various forms such as a film, a sheet, a foil, a net, a porous body, a foam, a non-woven body, and the like. Specifically, the electrode current collector 110 may be an anode current collector or a cathode current collector. If the electrode current collector 110 is a cathode current collector, the cathode current collector may contain copper. In addition, if the electrode current collector 110 is a cathode current collector, the cathode current collector may contain aluminum. More specifically, the electrode current collector 110 may be a cathode current collector.

The thickness of the electrode current collector 110 may be 3 µm to 500 µm, specifically 5 µm to 100 µm, and more specifically 5 µm to 30 µm.

The plasma treatment unit 130 is a component for performing plasma treatment by spraying a gas in a plasma state onto the surface of the unwound electrode current collector 110. The plasma treatment unit 130 may be disposed between the unwinding part 120 and the active material application unit 140. Accordingly, before applying the active material slurry to the electrode current collector 110, oiliness of the electrode current collector 110 may be removed by the plasma treatment in advance, so that the bonding force between the electrode current collector 110 and the active material layer may be improved. In addition, if a slurry used for forming an active material layer is an aqueous active material slurry, a washing process may be omitted and the aqueous active slurry may be applied to the electrode current collector 110, so that the equipment configuration may be simplified.

As illustrated in FIG. 2, the plasma treatment unit 130 may include a guide roller 131 that applies tension to the electrode current collector 110 and at least one plasma generator 133 inside the guide roller 131. The electrode current collector 110 provided from the unwinding part 120 is transported to the guide roller 131, and after being plasma-treated, the electrode current collector 110 may be transported to the active material application unit 130 depending on a rotation direction of the guide roller 131.

The plasma treatment unit 130 includes the plasma generator 133 inside the guide roller 131, and thus, does not require a separate plasma treatment space, so that the process efficiency may be improved by introducing the apparatus to a continuous process. In addition, since the electrode current collector 110 is plasma-treated during the process of transporting the electrode current collector 110 using the guide roller 131, the electrode current collector 110 may be uniformly plasma-treated without the occurrence of wrinkles, which is preferable.

One or more guide rollers 131, specifically two or more thereof may be provided. Specifically, as illustrated in FIG. 1, the guide roller 131 may include a first guide roller 131a and a second guide roller 131b. One surface of the electrode current collector 110 may be plasma-treated at the first guide roller 131a, and the other surface of the electrode current collector 110 may be plasma-treated at the second guide roller 131b. By providing two or more guide rollers 131, surface treatment may be uniformly performed on both surfaces of the electrode current collector 110.

The plasma generator 133 may spray a gas in a plasma state onto the surface of the electrode current collector 110 to surface-treat the same. Specifically, a gas in a plasma state may be sprayed onto the surface of the electrode current collector 110 in contact with the guide roller 131. The plasma generator 133 discharges a gas in a plasma state of a certain pressure onto the surface of the electrode current collector 110 in contact with the guide roller 131, so that wrinkles that may occur on the electrode current collector 110 may be prevented.

The plasma generator 133 may include a plasma generation module 135 and a discharge part 137 connected to the plasma generation module 135 and discharging plasma.

A plasma generation module used in the art may be used without limitation as the plasma generation module 135. Specifically, the plasma generation module 135 may generate low-temperature plasma. Low-temperature plasma is defined as plasma in which the energy of electrons is greater than the energy of ions, wherein the electrons and the ions constitute the plasma, and the low-temperature plasma only applies mild heat (about 30 °C to 40 °C) to a portion in direct contact therewith, and thus, is suitable for application to an electrode current collector which might have degraded physical properties due to phase transformation and grain growth of a metal caused by high temperatures. For example, the plasma generation module 135 may be a plasma generation module using corona discharge, electromagnetic waves, photocatalysts, and the like.

The discharge part 137 is connected to the plasma generation module 135 and may be defined as a nozzle that discharges plasma generated from the plasma generation module 135 to the outside. By the plasma sprayed from the discharge part 137, the oiliness of the electrode current collector 110 may be removed.

The spray pressure of plasma sprayed from the discharge part 137 may be 0.01 MPa to 3.0 MPa, specifically 0.1 MPa to 0.3 MPa, and more specifically 0.2 MPa to 0.3 MPa, and if the above-described ranges are satisfied, it is preferable in that the oiliness on the surface of the electrode current collector 110 is sufficiently removed, and damage to the electrode current collector 110 may be prevented.

The discharge part 137 of the plasma generator 133 may be disposed spaced apart from the electrode current collector 110. A separation distance H of the discharge part 137 and the electrode current collector 110 may be 1 mm to 20 mm, specifically 4 mm to 8 mm. If the separation distance H is less than 1 mm, there may be a problem in that the electrode current collector 110 may be damaged due to the spray pressure of plasma sprayed from the discharge part 137, and if greater than 20 mm, the oiliness on the surface of the electrode current collector 110 is not sufficiently removed, so that there may be a problem in that the bonding power to an active material layer decreases.

As illustrated in FIG. 2 and FIG. 3, the guide roller 131 may include an empty space 139 thereinside. The empty space 139 may be disposed between the plasma generator 133 and the electrode current collector 110. Specifically, the empty space 139 may be disposed between the discharge part 139 and the electrode current collector 110.

As illustrated in FIG. 3, at least a portion of the empty space 139 may be exposed to the outside, and the exposed portion of the empty space 139 may face the surface of the electrode current collector 110, and through the exposed portion, plasma may be sprayed onto the surface of the electrode current collector. The empty space 139 may be in the form of being covered by the electrode current collector 110.

Specifically, the guide roller 131 may be in the form of being filled with a metal except for the empty space 139 and plasma generator 133. A gas in a plasma state may be discharged from the plasma generator 133, and the gas in a plasma state may become excited and trapped in the empty space 139. Accordingly, the surface of the electrode current collector 110 in contact with the guide roller 131 is uniformly surface-treated, and wrinkles of the electrode current collector 110 that may occur during plasma treatment may be prevented.

As illustrated in FIG. 2, a length d1 of the empty space 139 in the width direction perpendicular to a transporting direction of the electrode current collector 110 may be shorter than a length d2 of the electrode current collector 110 in the width direction. If the length d1 of the empty space 139 in the width direction is longer than the length d2 of the electrode current collector 110 in the width direction, the gas in a plasma state discharged from the plasma generator is not trapped in the empty space 139 so that the surface of the electrode current collector 110 in contact with the guide roller 131 cannot be uniformly surface-treated, and a gas in a plasma state of a certain pressure is not applied to the electrode current collector 110, so that wrinkles may occur in the electrode current collector 110.

The surface energy of the plasma-treated electrode current collector may be 50 dyne/cm or greater, specifically 50 dyne/cm to 70 dyne/cm, and more specifically 50 dyne/cm to 60 dyne/cm. If the surface energy of the electrode current collector satisfies the above-described ranges, the coating quality of the electrode current collector improves, so that the boundary between a coated portion and an uncoated portion not coating treated may be manufactured according to a target electrode design, and particularly, the effect may be maximized in an aqueous electrode.

The surface energy may be measured by a Dyne Pen test at room temperature (e.g., 25°C). Specifically, the surface energy was measured by a Dyne Pen test. Specifically, using a surface energy measurement kit (Super Marker Pen Set, Applied Plasma Inc.), when a Dyne Pen test was performed on the surface of a specimen by using 14 types of Dyne Pens ranging from 30 dyne/cm to 56 dyne/cm included in the kit, a surface energy value of a Dyne Pen, which shows uniform diffusion of an ink without shrinkage of the boundary observed when the surface energy of the specimen and the surface energy of the Dyne Pen ink match, may be represented by a surface energy value of the specimen.

The active material application unit 140 is a component for applying an active material slurry to the surface of the electrode current collector 110 to form an active material layer. Specifically, the electrode current collector 110 plasma-treated in the plasma treatment unit 130 is transported to the active material application unit 140, and the active material slurry may be applied in the active material application unit 140.

The active material slurry may include an active material and a solvent. Specifically, the active material slurry may be an aqueous active material slurry containing an aqueous solvent. According to the present invention, oiliness on the surface of the electrode current collector 110 may be removed by the plasma treatment unit 130 to improve surface energy, an aqueous active material slurry may be smoothly applied to the electrode current collector 110 without causing liquid curling, and wettability of the electrode current collector 110 may be further improved. Therefore, the electrode manufacturing device according to the present invention is very effective in manufacturing a cathode or an anode using an aqueous cathode active material slurry or an aqueous anode active material slurry.

The active material may be an active material commonly used in the art, and may specifically be an anode active material or a cathode active material. The anode active material may include at least one selected from the group consisting of a lithium metal, a carbon material capable of reversible intercalation/de-intercalation of lithium ions, a metal or an alloy of the metal and lithium, a metal composite oxide, a material capable of doping and undoping lithium, and a transition metal oxide. The cathode active material is a compound capable of reversible intercalation and deintercalation of lithium, and specifically, may include a lithium metal oxide containing lithium and one or more metals such as cobalt, manganese, nickel, or aluminum. More specifically, the lithium metal oxide includes a lithium-manganese-based oxide, a lithium-cobalt-based oxide, a lithium-nickel-based oxide, a lithium-nickel-manganese-based oxide, a lithium-nickel-cobalt-based oxide, and a lithium-manganese-cobalt-based oxide, a lithium-nickel-manganese-cobalt-based oxide, a lithium-nickel-cobalt-transition metal (M) oxide, or the like, and any one or two or more of these compounds may be included.

The solvent may be a solvent commonly used in the art, and may specifically be an organic solvent or an aqueous solvent. The organic solvent may include at least one selected from the group consisting of dimethyl sulfoxide (DMSO), isopropyl alcohol, N-methylpyrrolidone (NMP), dimethyl formamide (DMF), and acetone. The aqueous solvent may be water (H₂O). The amount of solvent to be used is sufficient if the solvent dissolves or disperses the active material, a binder, and a conductive material in consideration of the application thickness and preparation yield of the slurry, and has a viscosity capable of exhibiting excellent thickness uniformity when applied for subsequent electrode manufacturing.

Specifically, when the solvent is an aqueous solvent, an electrode current collector generally requires a process of washing with water to remove oiliness therefrom before coating an aqueous active material slurry, which requires separate equipment, thereby resulting in increased costs, and there is a problem in that the process of washing with water is not applied to a continuous process. However, according to the present invention, even if the process of washing with water is omitted, by plasma treating the electrode current collector 110, it is possible to remove oiliness and apply an aqueous active material slurry on the electrode current collector 110, so that processing efficiency may be improved due to simplified equipment configuration. In addition, since the plasma generator 133 removes oiliness of the electrode current collector 110, thereby increasing surface energy, the bonding force between the electrode current collector 110 and the active material layer may be improved.

The active material slurry may further include at least one among a binder and a conductive material along with the active material and the solvent.

The binder serves to improve the adhesion between active material particles and the adhesion between an active material and a current collector. The active material may be applied to both of a non-aqueous binder and an aqueous binder, and the type of a binder is not particularly limited. As an example, an anode electrode active material in the present invention may be applied to an aqueous binder. As a specific example, the aqueous binder may include at least one among styrene-based rubber such as styrene-butadiene rubber (SBR), acrylate-styrene butadiene copolymer rubber (acrylate-co-SBR), or acrylonitrile-styrene butadiene copolymer rubber (acrylonitrileco-SBR), and an acrylate-based compound such as methylmethacrylate-lithium methacrylic acid copolymer (P(MMA-co-LiMA)), alkyl acrylate-acrylonitrile-acrylic acid copolymer (P(alkyl acrylate-co-acrylonitrile-acrylic acid)), polyacrylic acid (PAA), polyimide series, or the like.

The conductive material is a component for further improving the conductivity of a positive electrode active material, and the conductive material is not particularly limited as long as it has conductivity without causing a chemical change in the battery. As specific examples, graphite such as natural graphite and artificial graphite; carbon black such as acetylene black, Ketjen black, channel black, furnace black, lamp black, and thermal black; conductive fiber such as carbon fiber and metal fiber; fluorocarbon; metal powder such as aluminum powder and nickel powder; a conductive whisker such as zinc oxide and potassium titanate; a conductive metal oxide such as titanium oxide; a conductive material such as a polyphenylene derivative may be used.

For the application of the active material layer, a slurry application method known in the art may be used without limitation. Specifically, any one of slit-die, gravure, doctor blade, silk screen, offset, spray, and dip methods may be used.

The drying unit 150 is a component for drying an active material layer formed on the surface of the electrode current collector 110. Specifically, the electrode current collector 110 in which the active material layer is disposed may be transported to the drying unit 150 and dried. As the drying unit 150, drying means known in the art may be applied without limitation.

The winding part 160 is a component for winding the electrode current collector 110 in which the active material layer has been dried into the form of a roll. After the electrode current collector 110 is wound in the form of a roll in winding part 160, the electrode current collector 110 in the form of a roll may be stored or transported for subsequent processes for manufacturing an electrode or battery (e.g., roll-pressing of the active material layer, manufacturing of an electrode assembly, activation, etc.).

A backup roller 145 is a configuration for supporting the electrode current collector 110 to allow the active material layer to be stably applied. Auxiliary rollers 171, 173, 175, 177, 179, 181 are components for guiding the transport of the electrode current collector 110.

FIG. 4 is a view for describing a plasma treatment unit according to another embodiment of the present invention.

As illustrated in FIG. 4, the plasma treatment unit 130 may further include a mask sheet 210 disposed between the electrode current collector 110 and the guide roller 131. The mask sheet 210 may include one or more openings 212.

The mask sheet 210 allows selective plasma treatment at a specific position in the electrode current collector 110. Specifically, plasma generated from the plasma treatment unit 130 may pass through only the portion of the mask sheet 210 in which the opening 212 is formed, and plasma-treated at a position of the electrode current collector 110 corresponding to the opening 212. Meanwhile, plasma sprayed from the plasma treatment unit 130 may not pass through a portion of the mask sheet 210 in which the opening 212 is not formed.

Accordingly, when the slurry used to form the active material layer is an aqueous active material slurry, oiliness is removed from a plasma-treated region on the surface of the electrode current collector 110, and the surface energy of the electrode current collector 110 increases, thereby increasing bonding force with the active material layer, and oiliness is not removed from a region not plasma-treated and the surface energy of the electrode current collector 110 is low, thereby decreasing the bonding force with the active material layer. Accordingly, after the active material layer is dried, the active material layer formed in a portion of the electrode current collector 110 that has not been plasma-treated may be removed using air blowing, and the like, and finally, an electrode having an active material layer with a specific pattern may be implemented.

The shape of the opening 212 may be freely designed in consideration of the shape of an electrode pattern, and may be, for example, circular, triangular, or quadrangular.

One or more openings 212, specifically two or more thereof may be provided. If there are two or more openings, the two or more openings may be disposed spaced apart from each other.

The material of the mask sheet is not particularly limited, and specifically, the mask sheet may include at least one metal selected from the group consisting of aluminum, copper, iron, and tungsten, but is not limited thereto.

Specifically, when the slurry used to form the active material layer is an aqueous active material slurry, oiliness is removed from a plasma-treated region on the surface of the electrode current collector 110, thereby increasing bonding force with the active material layer, and oiliness is not removed from a region not plasma-treated, thereby decreasing the bonding force with the active material layer. In a region that have not been plasma-treated, an electrode with a specific pattern may be finally implemented through air blowing after applying and drying the active material layer.

### Electrode manufacturing method

In addition, the present invention provides an electrode manufacturing method. The electrode manufacturing method may be an electrode manufacturing method using the aforementioned electrode manufacturing apparatus.

Specifically, the electrode manufacturing method according to the present invention includes (A) preparing an electrode current collector, (B) plasma-treating the surface of the electrode current collector, and (C) applying an active material slurry to the surface of the electrode current collector to form an active material layer, wherein the step (B) is performed by a plasma generator disposed inside a guide roller that transports the electrode current collector and applies tension to the electrode current collector.

According to the present invention, if a slurry formed on an active material layer is an aqueous active material slurry, the aqueous active material slurry may be applied to an electrode current collector without a process of washing with water, so that processing efficiency may be improved by simplifying the equipment configuration.

In the electrode manufacturing method according to the present invention, the descriptions of the electrode current collector, the active material slurry, the active material layer, the plasma generator, the guide roller, and the like are the same as described in the electrode manufacturing apparatus described above.

Hereinafter, embodiments of the present invention will be described in detail so that those skilled in the art may easily carry out the present invention. However, the present invention may be embodied in many different forms, and is not limited to the embodiments set forth herein.

### Example 1

The surface of an electrode current collector unwound from an unwinding part, which continuously supplies an electrode current collector of the same aluminum A1100 12 µm, was plasma-treated using a plasma treatment unit according to the present invention. The plasma treatment conditions are as follows.
- Spray pressure of plasma sprayed from discharge part: 0.3 MPa
- Separation distance between discharge part and electrode current collector: 5 mm
- Output: 1,000 V
- Nozzle size: 60 Φmm
- Discharge gas: Air

### Comparative Example 1

An electrode current collector of the same aluminum A1100 12 µm not plasma-treated was prepared.

### Experimental Example 1: Surface energy of electrode current collector

The surface energy of the surface of Comparative Example 1, which was the electrode current collector unwound from the unwinding part, and the surface of Example 1, which was the electrode current collector plasma-treated in the plasma treatment unit, were measured. The measurement results are shown in [Table 1] below.

Specifically, the surface energy of the surface of the electrode current collector was measured using a contact angle measurement method. After dropping DI water or an MI solution on the surface of the electrode current collector at 25 °C, the angle between the surface of the electrode current collector and the liquid droplet may be measured in the Young contact angle mode using the MSA equipment by KRUSS Co. This is the result obtained by cross-verifying a Dyne level through a Super Marker Pen, a Dyne pen product of API Co.

**[Table 1]**

| | Surface energy (dyne/cm) |
|---|---|
| Example 1 | 56 |
| Comparative Example 1 | 30 |

### Experimental Example 2: Occurrence of wrinkles on electrode current collector

The occurrence of wrinkles was observed with the naked eye on the surface of Comparative Example 1, which was the electrode current collector unwound from the unwinding part, and on the surface of Example 1, which was the electrode current collector plasma treated in the plasma treatment unit. The observation results are represented by O/X in [Table 2] below.

**[Table 2]**

| | Wrinkles |
|---|---|
| Example 1 | X |
| Comparative Example 1 | O |

## Claims

1. An electrode manufacturing apparatus comprising:
an unwinding part for continuously supplying an electrode current collector wound in the form of a roll;
a plasma treatment unit for plasma-treating the surface of the wound electrode current collector;
an active material application unit for applying an active material slurry on the surface of the electrode current collector to provide an active material layer;
a drying unit for drying the active material layer disposed on the surface of the electrode current collector; and
a winding part for winding the electrode current collector having the dried active material layer into the form of a roll, wherein the plasma treatment unit includes a guide roller that applies tension to the electrode current collector and at least one plasma generator inside the guide roller, wherein the plasma generator performs surface treatment by spraying a gas in a plasma state onto the surface of the electrode current collector in contact with the guide roller.

2. The electrode manufacturing apparatus of claim 1, wherein the guide roller has an empty space thereinside, and the gas in a plasma state sprayed from the plasma generator is excited in the empty space.

3. The electrode manufacturing apparatus of claim 2, wherein at least a portion of the empty space is exposed to the outside, wherein the exposed portion of the empty space faces the surface of the electrode current collector.

4. The electrode manufacturing apparatus of claim 1, wherein the plasma generator comprises a plasma generation module, and a discharge part connected to the plasma generation module and discharging plasma, wherein the discharge part is disposed spaced apart from the electrode current collector.

5. The electrode manufacturing apparatus of claim 4, wherein the separation distance between the discharge part and the electrode current collector is 1 mm to 20 mm.

6. The electrode manufacturing apparatus of claim 1, wherein the electrode current collector comprises at least one selected from the group consisting of copper, stainless steel, aluminum, nickel, titanium, heat-treated carbon, and an aluminum-cadmium alloy.

7. The electrode manufacturing apparatus of claim 1, wherein the thickness of the electrode current collector is 3 µm to 500 µm.

8. The electrode manufacturing apparatus of claim 1, wherein the plasma treatment unit is disposed between the unwinding part and the active material application unit.

9. The electrode manufacturing apparatus of claim 1, wherein the plasma treatment unit comprises a first guide roller and a second guide roller, wherein one surface of the electrode current collector is plasma-treated at the first guide roller, and the other surface of the electrode current collector is plasma-treated at the second guide roller.

10. The electrode manufacturing apparatus of claim 1, wherein the active material slurry is an aqueous active material slurry including an active material and an aqueous solvent.

11. The electrode manufacturing apparatus of claim 1, wherein the surface energy of the plasma-treated electrode current collector is 50 dyne/cm.

12. The electrode manufacturing apparatus of claim 1, further comprising a mask sheet disposed between the electrode current collector and the guide roller, and including one or more openings, wherein plasma sprayed from the plasma generator passes through the opening of the mask sheet and surface-treats a specific position of the electrode current collector.

13. A method for manufacturing an electrode, the method comprising:
(A) preparing an electrode current collector;
(B) plasma-treating the surface of the electrode current collector; and
(C) applying an active material slurry to the surface of the electrode current collector to form an active material layer, wherein the step (B) is performed by a plasma generator disposed inside a guide roller that transports the electrode current collector and applies tension to the electrode current collector.
